(19) **Europäisches Patentamt**
**European Patent Office**
**Office européen des brevets**

(11) **EP 4 682 763 A1**

(12) **EUROPEAN PATENT APPLICATION**
published in accordance with Art. 153(4) EPC

(43) Date of publication:
**21.01.2026   Bulletin 2026/04**

(51) International Patent Classification (IPC):
**G06N 3/0455** (2023.01)    **G06N 3/08** (2023.01)
**G06F 18/25** (2023.01)    **G06F 18/213** (2023.01)

(21) Application number: **24778195.8**

(22) Date of filing: **29.03.2024**

(86) International application number:
**PCT/CN2024/084667**

(87) International publication number:
**WO 2024/199409 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **31.03.2023   CN 202310369601**

(71) Applicant: **Huawei Technologies Co., Ltd.
Shenzhen, Guangdong 518129 (CN)**

(72) Inventors:
• **PEI, Renjing
  Shenzhen, Guangdong 518129 (CN)**

• **GUAN, Peiyan
  Shenzhen, Guangdong 518129 (CN)**
• **SHAO, Bin
  Shenzhen, Guangdong 518129 (CN)**
• **LI, Weimian
  Shenzhen, Guangdong 518129 (CN)**
• **XU, Songcen
  Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD AND APPARATUS THEREOF**

(57)   A data processing method is disclosed, is applied to the field of video understanding in artificial intelligence, and includes: obtaining a video and text, where the text includes a plurality of text units; obtaining a first feature representation of the video based on the video by using an image encoder; obtaining, based on the text by using a text encoder, a second feature representation of each text unit and a third feature representation corresponding to the text, where the third feature representation is obtained by performing feature extraction by using the text encoder with the text as a whole; fusing the third feature representation and each second feature representation, to obtain a plurality of fourth feature representations; and performing contrastive learning between the first feature representation and the plurality of fourth feature representations, to update the image encoder and the text encoder. In this application, text information is fine-grained, so that processing precision of a network can be improved.

FIG. 5

**Description**

This application claims priority to Chinese Patent Application No. 202310369601.9, filed with the China National Intellectual Property Administration on March 31, 2023 and entitled "DATA PROCESSING METHOD AND APPARATUS", which is incorporated herein by reference in its entirety.

**TECHNICAL FIELD**

This application relates to the artificial intelligence field, and in particular, to a data processing method and apparatus.

**BACKGROUND**

Artificial intelligence (Artificial Intelligence, AI) is a theory, a method, a technology, and an application system that simulate and extend human intelligence by using a digital computer or a machine controlled by a digital computer, to perceive an environment, obtain knowledge, and use the knowledge to obtain an optimal result. In other words, the artificial intelligence is a branch of computer science and is intended to understand essence of intelligence and produce a new intelligent machine that can react in a manner similar to the human intelligence. The artificial intelligence is to study design principles and implementation methods of various intelligent machines, to enable the machines to have perception, inference, and decision-making functions.

Big data is combined with a foundation model under pre-training conditions, so that performance of image understanding tasks is significantly improved, and the image understanding task gradually develops from image understanding to video understanding. A multi-modal video understanding technology based on image-text pre-training can make full use of more image-text pre-training knowledge, and therefore becomes a mainstream direction of multi-modal video understanding.

A large amount of data shows that currently, network videos have surpassed conventional media such as images and text and become a mainstream internet medium. The multi-modal video understanding technology can provide a content understanding capability for short video services, including video labeling, classification, and retrieval, and has many application scenarios.

However, a content feature representation varies greatly between different modalities (especially between a video and text), and a model that can be compatible with multi-modal input data is urgently needed.

SUMMARY

This application provides a data processing method, to improve processing precision of a network.

According to a first aspect, this application provides a data processing method. The method includes: obtaining a video and text, where the text includes a plurality of text units; obtaining a first feature representation of the video based on the video by using an image encoder; obtaining, based on the text by using a text encoder, a second feature representation of each text unit and a third feature representation corresponding to the text, where the third feature representation is obtained by performing feature extraction by using the text encoder with the text as a whole; fusing the third feature representation and each second feature representation, to obtain a plurality of fourth feature representations; and performing contrastive learning between the first feature representation and the plurality of fourth feature representations, to update the image encoder and the text encoder.

In the conventional technology, during contrastive learning, a feature representation of a text branch includes only a feature representation obtained by performing feature extraction with text as a whole. However, during video processing, a branch processed at a granularity of an image block is included. This means that processing granularities on an image side and a text side are different. In this embodiment of this application, the feature representation of each text unit is obtained by processing the branch of the text. This means that a processing granularity of the branch of the text is lower than that in the conventional technology, and can be closer to that of the branch of the image, so that processing precision of a network can be improved. In addition, the feature representation of each text unit is obtained based on context information of the text unit and nearby context information, and can reflect only local information. In this embodiment of this application, the third feature representation obtained by performing feature extraction by using the text encoder with the text as a whole is fused into the feature representation corresponding to each text unit, so that the feature representation corresponding to each text unit also includes global text information, to improve the processing precision of the network.

In a possible implementation, the video includes a plurality of image frames, and the obtaining the first feature representation of the video based on the video by using the image encoder includes: performing feature extraction and attention operation based on the video by using the image encoder with each image frame as a whole, to obtain the first feature representation, where the first feature representation includes one first feature sub-representation corresponding to each image frame.

In a possible implementation, the image encoder may input each image frame to the image encoder as a whole (in other words, the image frame is not input to the image encoder as image blocks obtained through division). The image encoder may perform feature extraction and attention operation on each image frame, and the image encoder may focus on attention interaction in the spatial dimension.

In terms of a network structure, the image encoder may include a plurality of first network layers and a plurality of second network layers. When processing the plurality of image frames, the image encoder may perform feature extraction and perform attention operation in a spatial dimension in the image frame through the plurality of first network layers, and perform feature extraction and perform attention operation in a temporal dimension between the image frames through the plurality of second network layers. In a possible implementation, the plurality of first network layers may be connected before the plurality of second network layers, or a quantity of first network layers is greater than a quantity of second network layers. A connection sequence or a quantity of network layers is designed, so that the image encoder can focus on the attention interaction in the spatial dimension.

In a possible implementation, the video includes a plurality of image frames, and the obtaining the first feature representation of the video based on the video by using the image encoder includes: performing feature extraction and attention operation based on the video by using the image encoder with each image block in each image frame as a whole, to obtain a second feature representation, where the second feature representation includes one second feature sub-representation corresponding to each image block.

In a possible implementation, the image encoder may input the image block in each image frame to the image encoder as a whole (in other words, the image frame is input to the image encoder as image blocks obtained through division). The image encoder may perform feature extraction and attention operation on each image block, and the image encoder may focus on attention interaction in the temporal dimension.

In terms of the network structure, the image encoder may include a plurality of third network layers and a plurality of fourth network layers. When processing the plurality of image frames, the image encoder may perform feature extraction and perform attention operation in the temporal dimension between the image frames through the plurality of third network layers, and perform feature extraction and perform attention operation in the spatial dimension in the image frame through the plurality of second network layers. In a possible implementation, the plurality of third network layers are connected before the plurality of fourth network layers, or a quantity of third network layers is greater than a quantity of fourth network layers. A connection sequence or a quantity of network layers is designed, so that the image encoder can focus on attention interaction in the temporal dimension.

In a possible implementation, the image encoder includes a first encoder and a second encoder, the first encoder includes a first intermediate layer, and the second encoder includes a second intermediate layer; and the obtaining the first feature representation of the plurality of image frames based on the video by using the image encoder includes: performing feature extraction and attention operation based on the video by using the first encoder with each image frame as a whole, to obtain the first feature representation, where the first feature representation includes the first feature sub-representation corresponding to each image frame; and performing feature extraction and attention operation based on the video and an output of the first intermediate layer by using the second encoder with each image block in each image frame as a whole, to obtain the second feature representation, where the second feature representation includes the second feature sub-representation corresponding to each image block, and the output of the first intermediate layer is fused into an output or an input of the second intermediate layer.

In a possible implementation, the first encoder includes a plurality of first network layers and a plurality of second network layers, the first intermediate layer belongs to the plurality of first network layers or the plurality of second network layers, and the performing feature extraction and attention operation by using the first encoder includes: through the plurality of first network layers, performing feature extraction and performing attention operation in a spatial dimension in the image frame; and through the plurality of second network layers, performing feature extraction and performing attention operation in a temporal dimension between the image frames, where the plurality of first network layers are connected before the plurality of second network layers, or a quantity of first network layers is greater than a quantity of second network layers.

A first network layer includes all network layers that are in the first encoder and that are used to perform attention operation in the spatial dimension in the image frame, and a second network layer includes all network layers that are in the first encoder and that are used to perform attention operation in the temporal dimension between the image frames.

In a possible implementation, the second encoder includes a plurality of third network layers and a plurality of fourth network layers, the second intermediate layer belongs to the plurality of third network layers or the plurality of fourth network layers, and the performing feature extraction and attention operation by using the second encoder includes: through the plurality of third network layers, performing feature extraction and performing attention operation in the temporal dimension between the image frames, and through the plurality of second network layers, performing feature extraction and performing attention operation in the spatial dimension in the image frame, where the plurality of third network layers are connected before the plurality of fourth network layers, or a quantity of third network layers is greater than a quantity of fourth network layers.

A third network layer includes all network layers that are in the second encoder and that are used to perform attention operation in the temporal dimension between the image frames, and a fourth network layer includes all network layers that are in the second encoder and that are used to perform attention operation in the spatial dimension in the image frame.

The output of the first intermediate layer may be a feature obtained through spatial modeling, and the feature obtained through spatial modeling is fused into the second intermediate layer performing temporal modeling, to implement fusion of temporal modeling and spatial modeling. In addition, a visual branch structure (namely, a structure of the first encoder) of an original image-text pre-training model is not changed, and only a structure of the second encoder is changed, so that processing precision of the model is improved.

In a possible implementation, the first intermediate layer belongs to the plurality of first network layers and the second intermediate layer belongs to the plurality of third network layers.

In a possible implementation, that the output of the first intermediate layer is fused into the output or the input of the second intermediate layer includes: adjusting a size of the output of the first intermediate layer, where an adjusted size of the output of the first intermediate layer is consistent with a size of the input or the output of the second intermediate layer; and performing an addition operation on corresponding locations of the adjusted output of the first intermediate layer and the input or the output of the second intermediate layer.

In a possible implementation, a location of the first intermediate layer in the first encoder matches a location of the second intermediate layer in the first encoder.

In a possible implementation, the performing contrastive learning between the first feature representation and the plurality of fourth feature representations includes: performing contrastive learning between the first feature representation and the plurality of fourth feature representations; and performing contrastive learning between the first feature representation and the third feature representation.

According to a second aspect, this application provides a data processing apparatus. The apparatus includes:

an obtaining module: configured to obtain a video and text, where the text includes a plurality of text units; and
a processing module, configured to: obtain a first feature representation of the video based on the video by using an image encoder;
obtain, based on the text by using a text encoder, a second feature representation of each text unit and a third feature representation corresponding to the text, where the third feature representation is obtained by performing feature extraction by using the text encoder with the text as a whole;
fuse the third feature representation and each second feature representation, to obtain a plurality of fourth feature representations; and
perform contrastive learning between the first feature representation and the plurality of fourth feature representations, to update the image encoder and the text encoder.

In a possible implementation, the processing module is specifically configured to:
perform feature extraction and attention operation based on the video by using the image encoder with each image frame as a whole, to obtain the first feature representation, where the first feature representation includes one first feature sub-representation corresponding to each image frame.

In a possible implementation, the processing module is specifically configured to:
perform feature extraction and attention operation based on the video by using the image encoder with each image block in each image frame as a whole, to obtain a second feature representation, where the second feature representation includes one second feature sub-representation corresponding to each image block.

In a possible implementation, the image encoder includes a first encoder and a second encoder, the first encoder includes a first intermediate layer, and the second encoder includes a second intermediate layer; and
the processing module is specifically configured to:

perform feature extraction and attention operation based on the video by using the first encoder with each image frame as a whole, to obtain the first feature representation, where the first feature representation includes the first feature sub-representation corresponding to each image frame; and
perform feature extraction and attention operation based on the video and an output of the first intermediate layer by using the second encoder with each image block in each image frame as a whole, to obtain the second feature representation, where the second feature representation includes the second feature sub-representation corresponding to each image block, and the output of the first intermediate layer is fused into an output or an input of the second intermediate layer.

In a possible implementation, the first encoder includes a plurality of first network layers and a plurality of second network layers, the first intermediate layer belongs to the plurality of first network layers or the plurality of second network layers, and the processing module is specifically configured to:

perform feature extraction and perform attention operation in a spatial dimension in the image frame through the plurality of first network layers, and perform feature extraction and perform attention operation in a temporal dimension between the image frames through the plurality of second network layers, where
the plurality of first network layers are connected before the plurality of second network layers, or a quantity of first network layers is greater than a quantity of second network layers.

In a possible implementation, the second encoder includes a plurality of third network layers and a plurality of fourth network layers, the second intermediate layer belongs to the plurality of third network layers or the plurality of fourth network layers, and the processing module is specifically configured to:

perform feature extraction and perform attention operation in the temporal dimension between the image frames through the plurality of third network layers, and perform feature extraction and perform attention operation in the spatial dimension in the image frame through the plurality of second network layers, where
the plurality of third network layers are connected before the plurality of fourth network layers, or a quantity of third network layers is greater than a quantity of fourth network layers.

In a possible implementation, the first intermediate layer belongs to the plurality of first network layers and the second intermediate layer belongs to the plurality of third network layers.

In a possible implementation, the processing module is specifically configured to:
adjust a size of the output of the first intermediate layer, where an adjusted size of the output of the first intermediate layer is consistent with a size of the input or the output of the second intermediate layer; and perform an addition operation on corresponding locations of the adjusted output of the first intermediate layer and the input or the output of the second intermediate layer.

In a possible implementation, a location of the first intermediate layer in the first encoder matches a location of the second intermediate layer in the first encoder.

In a possible implementation, the processing module is specifically configured to:
perform contrastive learning between the first feature representation and the plurality of fourth feature representations; and perform contrastive learning between the first feature representation and the third feature representation.

According to a third aspect, this application provides a data processing method. The method includes:

obtaining a video and text, where the text includes a plurality of text units;
obtaining a first feature representation of the video based on the video by using an image encoder;
obtaining, based on the text by using a text encoder, a second feature representation of each text unit and a third feature representation corresponding to the text, where the third feature representation is obtained by performing feature extraction by using the text encoder with the text as a whole;
fusing the third feature representation and each second feature representation, to obtain a plurality of fourth feature representations; and
obtaining a task processing result based on the first feature representation and the plurality of fourth feature representations over a task network.

In a possible implementation, the task network is used to implement at least one of the following tasks: a video retrieval task, a video classification task, a video positioning task, and a video generation task (for example, video question and answer and video title generation).

According to a fourth aspect, this application provides a data processing apparatus. The apparatus includes:

an obtaining module: configured to obtain a video and text, where the text includes a plurality of text units; and
a processing module, configured to: obtain a first feature representation of the video based on the video by using an image encoder;
obtain, based on the text by using a text encoder, a second feature representation of each text unit and a third feature representation corresponding to the text, where the third feature representation is obtained by performing feature extraction by using the text encoder with the text as a whole;
fuse the third feature representation and each second feature representation, to obtain a plurality of fourth feature representations; and
obtain a task processing result based on the first feature representation and the plurality of fourth feature representations over a task network.

In a possible implementation, the task network is used to implement at least one of the following tasks: a video retrieval task, a video classification task, a video positioning task, and a video generation task (for example, video question and answer and video title generation).

According to a fifth aspect, this application provides a data processing method. The method includes:

obtaining a video and text, where the text includes a plurality of text units;

obtaining a first feature representation of the video based on the video by using an image encoder;

obtaining, based on the text by using a text encoder, a second feature representation of each text unit and a third feature representation corresponding to the text, where the third feature representation is obtained by performing feature extraction by using the text encoder with the text as a whole;

fusing the third feature representation and each second feature representation, to obtain a plurality of fourth feature representations;

obtaining a task processing result based on the first feature representation and the plurality of fourth feature representations over a task network; and

updating the image encoder, the text encoder, and the task network based on the task processing result.

In a possible implementation, the task network is used to implement at least one of the following tasks: a video retrieval task, a video classification task, a video positioning task, and a video generation task (for example, video question and answer and video title generation).

According to a sixth aspect, this application provides a data processing apparatus. The apparatus includes:

an obtaining module: configured to obtain a video and text, where the text includes a plurality of text units; and

a processing module, configured to: obtain a first feature representation of the video based on the video by using an image encoder;

obtain, based on the text by using a text encoder, a second feature representation of each text unit and a third feature representation corresponding to the text, where the third feature representation is obtained by performing feature extraction by using the text encoder with the text as a whole;

fuse the third feature representation and each second feature representation, to obtain a plurality of fourth feature representations;

obtain a task processing result based on the first feature representation and the plurality of fourth feature representations over a task network; and

update the image encoder, the text encoder, and the task network based on the task processing result.

In a possible implementation, the task network is used to implement at least one of the following tasks: a video retrieval task, a video classification task, a video positioning task, and a video generation task (for example, video question and answer and video title generation).

According to a seventh aspect, an embodiment of this application provides a training apparatus. The training apparatus may include a memory, a processor, and a bus system. The memory is configured to store a program. The processor is configured to execute the program in the memory, to perform the method according to the first aspect and any optional implementation of the first aspect, and the method according to the fifth aspect and any optional implementation of the fifth aspect.

According to an eighth aspect, an embodiment of this application provides an execution apparatus. The execution apparatus may include a memory, a processor, and a bus system. The memory is configured to store a program, and the processor is configured to execute the program in the memory, to perform the method according to the third aspect and any optional implementation of the third aspect.

According to a ninth aspect, an embodiment of this application provides a computer-readable storage medium. The computer-readable storage medium stores a computer program, and when the computer program is run on a computer, the computer is enabled to perform the method according to the first aspect and any optional implementation of the first aspect, the method according to the third aspect and any optional implementation of the third aspect, and the method according to the fifth aspect and any optional implementation of the fifth aspect.

According to a tenth aspect, an embodiment of this application provides a computer program. When the computer program is run on a computer, the computer is enabled to perform the method according to the first aspect and any optional implementation of the first aspect, the method according to the third aspect and any optional implementation of the third aspect, and the method according to the fifth aspect and any optional implementation of the fifth aspect.

According to an eleventh aspect, this application provides a chip system. The chip system includes a processor, configured to support a data processing apparatus in implementing functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete component.

## BRIEF DESCRIPTION OF DRAWINGS

FIG. 1A is a diagram of a structure of a main framework of artificial intelligence;
FIG. 1B and FIG. 1C are diagrams of system frameworks of an application according to the present invention;
FIG. 1D is a diagram of an optional hardware structure of a terminal;
FIG. 2 is a diagram of a structure of a server;
FIG. 3 is diagram of a system architecture according to this application;
FIG. 4 shows a cloud service procedure;
FIG. 5 is a schematic flowchart of a data processing method according to an embodiment of this application;
FIG. 6 to FIG. 9 are diagrams of processing of a data processing method according to an embodiment of this application;
FIG. 10 is a diagram of a structure of a data processing apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

## DESCRIPTION OF EMBODIMENTS

The following describes embodiments of the present invention with reference to accompanying drawings in embodiments of the present invention. Terms used in implementation parts of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of new scenarios, technical solutions provided in embodiments of this application are also applicable to a similar technical problem.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants thereof mean to cover non-exclusive inclusion, so that a process, method, system, product, or device that includes a series of units is not necessarily limited to those units, but may include other units not expressly listed or inherent to such a process, method, product, or device.

Terms "substantially (substantially)", "about (about)", and the like are used herein as approximation terms rather than as degree terms, and are intended to take into account inherent deviations of measured values or computed values that are known to a person of ordinary skill in the art. In addition, when embodiments of the present invention are described, "may (may)" means "one or more possible embodiments". Terms "use (use)", "using (using)", and "used (used)" used herein may be considered to be synonymous with terms "utilize (utilize)", "utilizing (utilizing)", and "utilized (utilized)", respectively. In addition, a term "example (exemplary)" is intended to refer to an example or illustration.

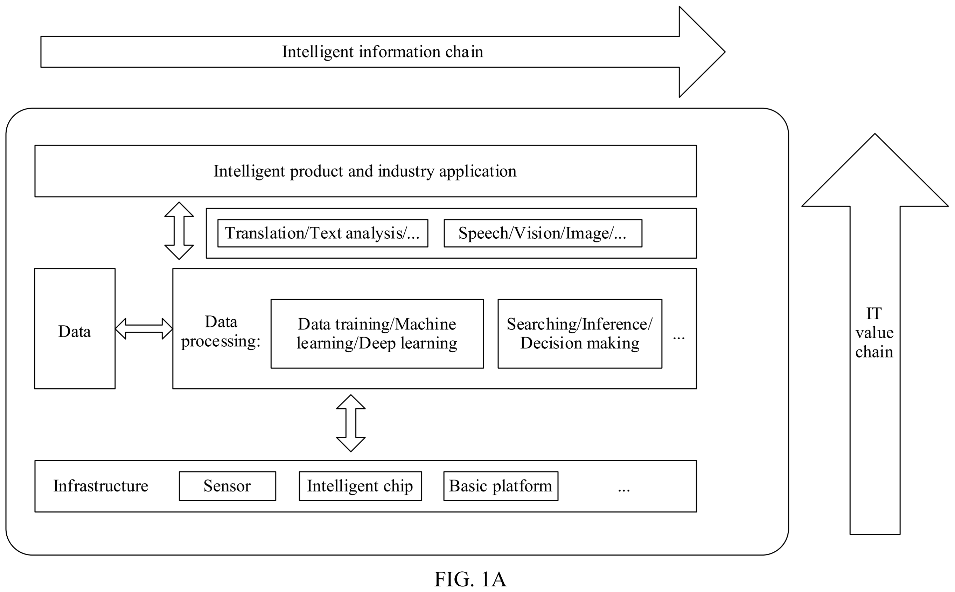

First, an overall working process of an artificial intelligence system is described. FIG. 1A is a diagram of a structure of a main framework of artificial intelligence. The following describes the main framework of artificial intelligence from two dimensions: an "intelligent information chain" (a horizontal axis) and an "IT value chain" (a vertical axis). The "intelligent information chain" reflects a series of processes from data obtaining to data processing. For example, the process may be a general process of intelligent information perception, intelligent information representation and formation, intelligent inference, intelligent decision-making, and intelligent execution and output. In the process, data undergoes a refinement process of "data-information-knowledge-intelligence". The "IT value chain" reflects a value brought by the artificial intelligence to the information technology industry from underlying infrastructure and information (technology providing and processing implementation) of the artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided, for computing, for an intelligent chip in a distributed computing system provided by the basic platform.

(2) Data

The data at an upper layer of the infrastructure indicates a data source in the artificial intelligence field. The data relates to a graph, an image, speech, and text, further relates to internet of things data of a conventional device, and includes service data of a conventional system and perception data such as force, displacement, a liquid level, a temperature, and humidity.

(3) Data processing

Data processing usually includes data training, machine learning, deep learning, searching, inference, decision-making, and the like.
During machine learning and deep learning, symbolized and formalized intelligent information modeling, extraction, preprocessing, training, and the like may be performed on data.
Inference is a process in which human intelligent inference is simulated in a computer or an intelligent system, and machine thinking and problem resolving are performed based on formal information according to an inference control policy. A typical function is searching and matching.
Decision making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capability may be an algorithm or a general system, for example, translation, text analysis, computer vision processing, speech recognition, or image recognition.

(5) Intelligent product and industry application

The intelligent product and the industry application are a product and application of the artificial intelligence system in various fields, encapsulate an overall solution of the artificial intelligence, and mean that an intelligent information decision is turned into a product and applied. Fields to which the artificial intelligence system is applied mainly include an intelligent terminal, intelligent transportation, intelligent healthcare, autonomous driving, a smart city, and the like.
This application may be applied to the natural language processing field in the artificial intelligence field. The following uses natural language processing as an example to describe a plurality of application scenarios implemented in products.
An application scenario of this application is first described. This application may be applied to but is not limited to an application that has a video understanding function for a video and text (briefly referred to as a video understanding application below), a cloud service provided by a cloud-side server, or the like. The following separately provides descriptions.

1. Video understanding application

A product form in embodiments of this application may be the video understanding application. The video understanding application may run on a terminal device or a cloud-side server.
In a possible implementation, the video understanding application may implement a task of processing multi-modal data, to obtain a processing result. In other words, a same processing model may process input data of a plurality of modalities (including a video and text).
For example, the video understanding application may implement at least video understanding tasks such as a video classification task, a video searching task, a video recommendation task, a video positioning task, and an advertisement matching task. However, this is not limited thereto.
In a possible implementation, a user may start the video understanding application installed on the terminal device, and input multi-modal data such as a video and text (the text may be triggered by an instruction, and is not necessarily actively input by the user). The video understanding application may process the video and the text by using a model obtained through training by using the method provided in embodiments of this application, or by using the method provided in embodiments of this application, and present a processing result to the user (a presentation manner may be but is not limited to displaying, saving, uploading to the cloud side, or the like).

In a possible implementation, the user may start the video understanding application installed on the terminal device, and input multi-modal data such as a video and text. The video understanding application may send the multi-modal data such as the video and the text to the cloud-side server, the cloud-side server processes the image by using a multi-modal model obtained through training by using the method provided in embodiments of this application, and returns a processing result to the terminal device. The terminal device may present the processing result to the user (a presentation manner may be but is not limited to displaying, saving, uploading to the cloud side, or the like).

The following describes the video understanding application in embodiments of this application separately from perspectives of a functional architecture and a product architecture for implementing a function.

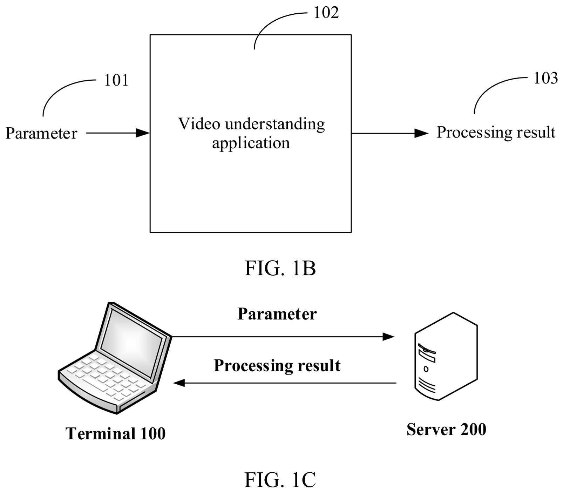

FIG. 1B is a diagram of the functional architecture of the video understanding application according to an embodiment of this application.

In a possible implementation, as shown in FIG. 1B, the video understanding application 102 may receive an input parameter 101 (for example, including an image) and generate a processing result 103. The video understanding application 102 may be executed on (for example) at least one computer system, and includes computer code. When the computer code is executed by one or more computers, the computer is enabled to execute the multi-modal model obtained through training by using the method provided in embodiments of this application.

FIG. 1C is a diagram of an entity architecture for running the video understanding application according to an embodiment of this application.

FIG. 1C is a diagram of a system architecture. The system may include a terminal 100 and a server 200. The server 200 may include one or more servers (in FIG. 1C, an example in which one server is included is used for description), and the server 200 may provide a video understanding function for one or more terminals.

The video understanding application may be installed on the terminal 100, or a web page related to the video understanding function may be started on the terminal 100. The application and the web page may provide an interface. The terminal 100 may receive a related parameter entered by a user on the video understanding function interface, and send the parameter to the server 200. The server 200 may obtain a processing result based on the received parameter, and return the processing result to the terminal 100.

It should be understood that, in some optional implementations, the terminal 100 may alternatively complete an action of obtaining a processing result based on a received parameter without cooperation of the server. This is not limited in embodiments of this application.

The following describes a product form of the terminal 100 in FIG. 1C.

The terminal 100 in this embodiment of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

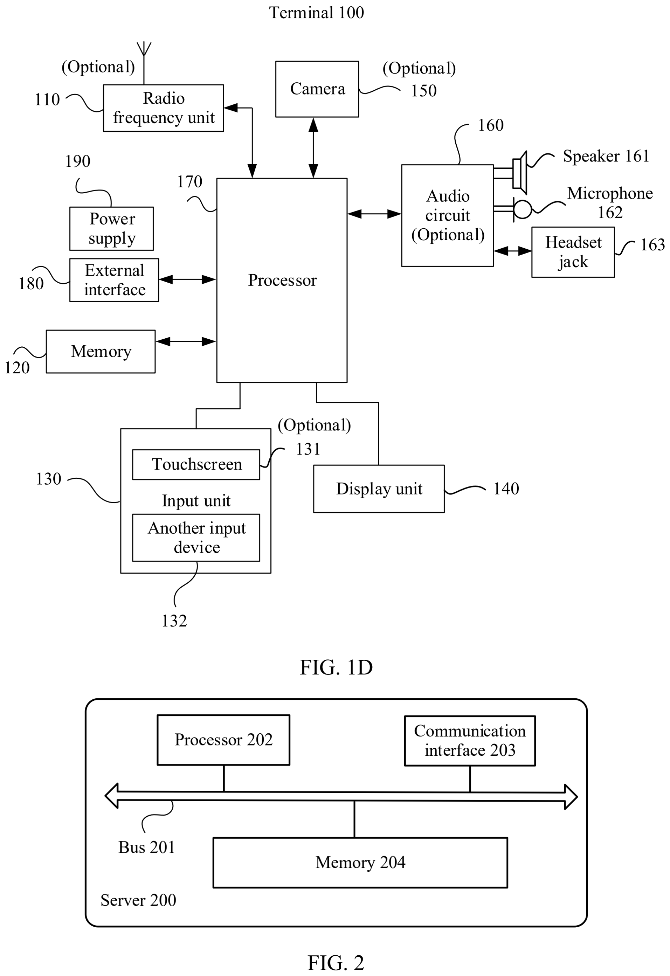

FIG. 1D is a diagram of an optional hardware structure of the terminal 100.

Refer to FIG. 1D. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-functional device and does not constitute a limitation on the terminal or the multi-functional device. The terminal or the multi-functional device may include more or fewer components than those shown in the figure, a combination of some components, or have different components.

The input unit 130 may be configured to: receive input digital or character information, and generate a key signal input related to a user setting and function control of a portable multi-functional apparatus. Specifically, the input unit 130 may include a touchscreen 131 (optional) and/or another input device 132. The touchscreen 131 may collect a touch operation (for example, an operation performed by the user on or near the touchscreen by using any proper object such as a finger, a joint, or a stylus) performed by a user on or near the touchscreen 131, and drive a corresponding connection apparatus based on a preset program. The touchscreen may detect a touch operation performed by the user on the touchscreen, convert the touch operation into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared type, and a surface acoustic wave type. In addition to the touchscreen 131, the input unit 130 may include the another input device. Specifically, the another input device 132 may include but is not limited to one or more of a physical keyboard, a function button (such as a volume control button 132 or a power on/off button 133), a trackball, a mouse, a joystick, and the like.

The input device 132 may receive input multi-modal data such as a video and text.

The display unit 140 may be configured to display information entered by the user, information provided for the user, various menus of the terminal 100, an interaction interface, a file, and/or play any multimedia file. In this embodiment of this application, the display unit 140 may be configured to display the interface, the processing result, and the like of the video understanding application.

The memory 120 may be configured to store instructions and data. The memory 120 may mainly include an instruction storage area and a data storage area. The data storage area may store various kinds of data such as a multimedia file and text. The instruction storage area may store software units such as an operating system, an application, and instructions required by at least one function, or subsets and extended sets thereof. The memory 120 may further include a non-volatile random access memory, and provide hardware, software, a data resource, and the like in a management and computing processing device to the processor 170, to support control on software and an application. The memory 120 is further configured to: store a multimedia file, and run a program and store an application.

The processor 170 is a control center of the terminal 100, connects parts of the entire terminal 100 through various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In other embodiments, the processor and the memory may be implemented on separate chips. The processor 170 may be further configured to: generate a corresponding operation control signal, send the operation control signal to a corresponding component in the computing processing device, and read and process data in software, especially read and process the data and the program in the memory 120, so that functional modules perform corresponding functions, to control a corresponding component to perform an operation as required by an instruction.

The memory 120 may be configured to store software code related to the data processing method. The processor 170 may perform steps of the data processing method of a chip, or may schedule another unit (for example, the input unit 130 and the display unit 140) to implement a corresponding function.

The radio frequency unit 110 (optional) may be configured to receive and send a signal in an information receiving and sending process or a call process. For example, after receiving downlink information of a base station, the radio frequency unit 110 sends the downlink information to the processor 170 for processing. In addition, the radio frequency unit 110 sends uplink-related data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short messaging service (Short Messaging Service, SMS), and the like.

In this embodiment of this application, the radio frequency unit 110 may send the multi-modal data such as the video and the text to the server 200, and receive the processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of the methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one thick line in FIG. 2, but this does not indicate that there is only one bus or one type of bus.

The processor 202 may be any one or more of processors such as a central processing unit (central processing unit CPU), a graphics processing unit (graphics processing unit, GPU), a microprocessor (microprocessor, MP), or a digital signal processor (digital signal processor DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a mechanical hard disk drive (hard disk drive, HDD), or a solid-state drive (solid-state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be central or distributed devices. Processors (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, for example, a CPU or a DSP, may be a hardware system that does not have an instruction execution function, for example, an ASIC or an FPGA, or may be a combination of the hardware system that does not have an instruction execution function and the hardware system that has an instruction execution function.

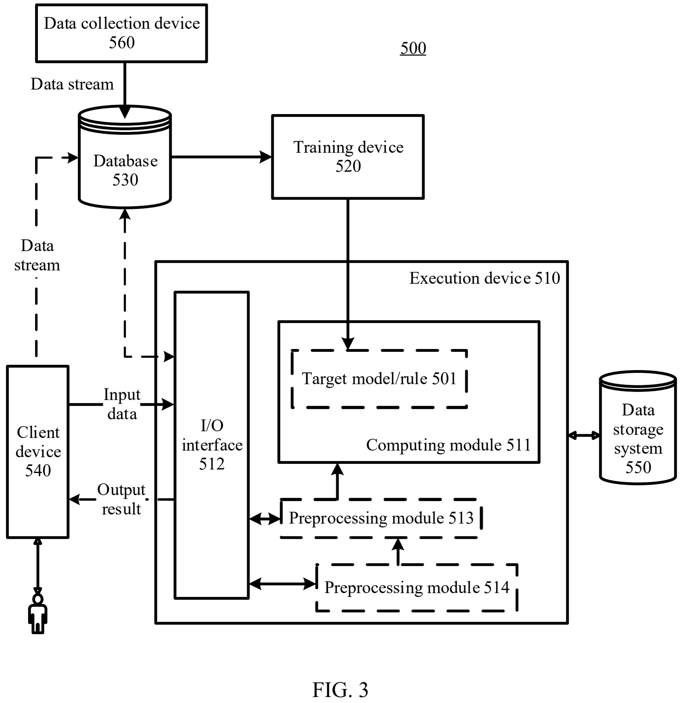

It should be understood that steps related to a model inference process in embodiments of this application relate to AI-related operation. When the AI operation is performed, an instruction execution architecture of the terminal device and the server is not limited to the architecture in which the processor and the memory are combined. A system architecture according to an embodiment of this application is described in detail below with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The execution device 510 may be the terminal device or the server that runs the video understanding application.

The data collection device 560 is configured to collect a training sample. The training sample may be multi-modal data such as a video and text. After collecting the training sample, the data collection device 560 stores the training sample in the database 530.

The training device 520 may obtain the target model/rule 501 by training a to-be-trained neural network (for example, a model (for example, including an image encoder or a text encoder) in embodiments of this application) based on the training sample maintained in the database 530.

It should be understood that the training device 520 may perform a pre-training process on the to-be-trained neural network based on the training sample maintained in the database 530, or perform fine tuning on a model based on pre-training.

It should be noted that in an actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training based on a training sample obtained from a cloud or another place. The foregoing descriptions should not be construed as a limitation on this embodiment of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the execution device 510 is configured with the input/output (input/output, I/O) interface 512, configured to exchange data with an external device. A user may enter data (for example, the multi-modal data such as the video and the text in this embodiment of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process like computing, the execution device 510 may invoke data, code, and the like in the data storage system 550 for corresponding processing, or may store, in the data storage system 550, data, instructions, and the like obtained through corresponding processing.

Finally, the I/O interface 512 provides a processing result for the client device 540, to provide the processing result for the user.

In the case shown in FIG. 3, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. Specifically, the result may be presented in a form of display, sound, an action, or the like. The client device 540 may also serve as a data collection terminal, to collect, as new sample data, input data input to the I/O interface 512 and an output result output from the I/O interface 512 that are shown in the figure, and store the new sample data in the database 530. Certainly, the client device 540 may alternatively not perform collection. Instead, the I/O interface 512 directly stores, in the database 530 as the new sample data, the input data input to the I/O interface 512 and the output result output from the I/O interface 512 that are shown in the figure.

It should be noted that FIG. 3 is merely a diagram of a system architecture according to an embodiment of this application. A location relationship between a device, a component, a module, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:

In this embodiment of this application, the computing module 511 in the execution device 520 may obtain the code stored in the data storage system 550, to implement steps related to a model inference process in embodiments of this application.

In this embodiment of this application, the computing module 511 in the execution device 520 may include hardware circuits (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, may be a hardware system that does not have an instruction execution function, for example, an ASIC or an FPGA, or may be a combination of the hardware system that does not have an instruction execution function and the hardware system that has an instruction execution function.

Specifically, the computing module 511 in the execution device 520 may be a hardware system that has an instruction execution function. The steps related to the model inference process provided in embodiments of this application may be software code stored in a memory. The computing module 511 in the execution device 520 may obtain the software code from the memory, and execute the obtained software code to implement the steps related to the model inference process provided in embodiments of this application.

It should be understood that the computing module 511 in the execution device 520 may be a combination of the hardware system that does not have an instruction execution function and the hardware system that has an instruction execution function. Some of the steps related to the model inference process provided in embodiments of this application may be implemented by the hardware system that does not have an instruction execution function in the computing module 511 in the execution device 520. This is not limited herein.

Details from a perspective of model training are as follows.

In embodiments of this application, the training device 520 may obtain code stored in a memory (which is not shown in FIG. 3, and may be integrated into the training device 520 or separately deployed from the training device 520), to implement steps related to model training in embodiments of this application.

In this embodiment of this application, the training device 520 may include hardware circuits (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, may be a hardware system that does not have an instruction execution function, for example, an ASIC or an FPGA, or may be a combination of the hardware system that does not have an instruction execution function and the hardware system that has an instruction execution function.

It should be understood that the training device 520 may be a combination of the hardware system that does not have an instruction execution function and the hardware system that has an instruction execution function. Some of the steps related to the model training provided in embodiments of this application may be implemented by the hardware system that does not have an instruction execution function in the training device 520. This is not limited herein.

2. Video understanding function cloud service provided by a server:

In a possible implementation, the server may provide a video understanding function service for a terminal side through an application programming interface (application programming interface, API).

The terminal device may send a related parameter (for example, data such as an image or text) to the server through the API provided by the cloud, and the server may obtain a processing result and the like based on the received parameter, and return the processing result to the terminal.

For descriptions of the terminal and the server, refer to the descriptions in the foregoing embodiments. Details are not described herein again.

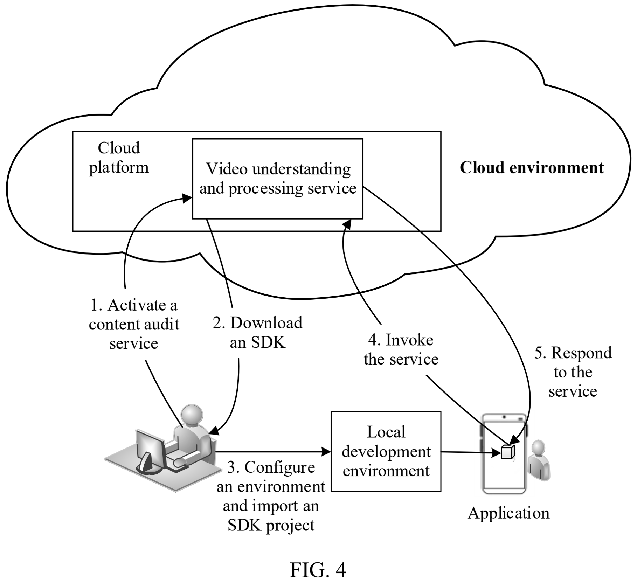

FIG. 4 shows a procedure of using a video understanding function cloud service provided by a cloud platform.

1. Activate and purchase a content audit service.

2. A user may download a software development kit (software development kit, SDK) corresponding to the content audit service. Usually, the cloud platform provides SDKs of a plurality of development versions for the user to select based on a development environment requirement, for example, a Java-version SDK, a Python-version SDK, a PHP-version SDK, and an Android-version SDK.

3. After locally downloading an SDK of a corresponding version based on the requirement, the user imports an SDK project to a local development environment, and performs configuration and debugging in the local development environment. Another function may be further developed in the local development environment, to form an application that integrates a video understanding function capability.

4. When a video understanding function application needs to perform the video understanding function, API invoking for the video understanding function may be triggered. When triggering the video understanding function, the application initiates an API request to a running instance of the video understanding function service in the cloud environment. The API request carries an image, and the running instance in the cloud environment processes the image to obtain a processing result.

5. The cloud environment returns the processing result to the application. In this way, video understanding function invoking is completed once.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f\left(\sum_{s=1}^{n} W_s x_s + b\right);$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be an area including several neurons.

(2) Transformer layer

A neural network includes an embedding layer and at least one transformer layer. The at least one transformer layer may be N transformer layers (N is an integer greater than 0), and each transformer layer includes an attention layer, an addition and normalization (add & norm) layer, a feedforward (feedforward) layer, and an addition and normalization layer that are sequentially adjacent to each other. At the embedding layer, embedding processing is performed on a current input to obtain a plurality of embedding vectors. At the attention layer, P input vectors are obtained from a previous layer of a first transformer layer. Any first input vector in the P input vectors is used as a center. An intermediate vector corresponding to the first input vector is obtained based on an association degree between the first input vector and each input vector within a preset attention window range. In this way, P intermediate vectors corresponding to the P input vectors are determined. At a pooling layer, the P intermediate vectors are combined into Q output vectors. A plurality of output vectors obtained at a last transformer layer in the transformer layer are used as a feature representation of the current input.

(3) Attention mechanism (attention mechanism)

The attention mechanism simulates an internal process of biological observation behavior, is a mechanism that aligns internal experience with external feelings to increase observation fineness of some areas, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, Lx=‖Source‖ represents a length of a source. The formula means that constituent elements in the source are assumed to include a series of data pairs. In this case, given an element query in a target (Target), a weight coefficient of a value corresponding to each key is obtained by computing a similarity or a correlation between the query and the key, and then weighted addition is performed on values, to obtain a final attention value. Therefore, in essence, the attention mechanism is to perform weighted addition on values of the elements in the source, and a query and key are used to compute a weight coefficient of a corresponding value. Conceptually, attention may be understood as selecting a small amount of important information from a large amount of information, focusing on the important information, and ignoring most of unimportant information. A process of focusing is reflected in computing of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention computing mechanism in a special case of Target=Source. A specific computing process of the self-attention mechanism is the same except that a computing object changes.

(4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. Through NLP and components of NLP, massive chunks of text data can be managed, or a large quantity of automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(5) Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to enable the error loss to converge. The back propagation algorithm is an error-loss-centered back propagation motion intended to obtain an optimal parameter, for example, a weight matrix, of the super-resolution model.

(6) Loss function

In a process of training a deep neural network, because it is expected that an output of the deep neural network is as close as possible to a value that actually needs to be predicted, a current predicted value of the network may be compared with an actually expected target value, and then a weight vector at each layer of the neural network is updated based on a difference between the current predicted value and the target value (certainly, there is usually an initialization process before first updating, to be specific, a parameter is preconfigured for each layer of the deep neural network). For example, if the predicted value of the network is large, the weight vector is adjusted to decrease the predicted value, and adjustment is continuously performed, until the deep neural network can predict the actually expected target value or a value that is quite close to the actually expected target value. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(7) Encoder/Decoder

The encoder and the decoder usually exist in pairs. For example, a sequence model (sequence2sequence model) includes at least one encoder and at least one decoder. An operating core of the encoder and the decoder is as follows: The encoder encodes input raw data into an intermediate feature, and the decoder decodes the intermediate feature into a target result.

(8) A multilayer perceptron (multilayer perceptron, MLP) is an artificial neural network with a forward structure, and maps a group of input vectors to a group of output vectors. The MLP can be considered as a directed graph that includes a plurality of node layers. Each layer is fully connected to a next layer. Except an input node, each node is a neuron (or referred to as a processing unit) with a non-linear activation function.

Big data is combined with a foundation model under pre-training conditions, so that performance of image understanding tasks is significantly improved, and the image understanding task gradually develops from image understanding to video understanding. A multi-modal video understanding technology based on image-text pre-training can make full use of more image-text pre-training knowledge, and therefore becomes a mainstream direction of multi-modal video understanding.

A large amount of data shows that currently, network videos have surpassed conventional media such as images and text and become a mainstream internet medium. The multi-modal video understanding technology can provide a content understanding capability for short video services, including video labeling, classification, and retrieval, and has many application scenarios.

In current implementation, temporal modeling (modeling performed at a granularity of an image block in an image frame) is inserted at an interval inside an original visual branch (modeling performed at a granularity of an image frame), to implement interactive spatial-temporal information understanding at the granularity of the image block in the image frame. However, in the foregoing implementation, a visual branch structure of an original image-text pre-training model is damaged, and a large amount of image-text pre-training information is lost. In addition, the pre-training model usually constructs contrastive learning between an entire image and entire text. When the pre-training model is directly used for fine-grained modeling (modeling performed at the granularity of the image block in the image frame), there is a problem that fine-grained degrees of text information and image information are different. Consequently, processing precision of a network is poor.

To resolve the foregoing problem, embodiments of this application provide a data processing method. The following describes in detail the data processing method in embodiments of this application with reference to the accompanying drawings.

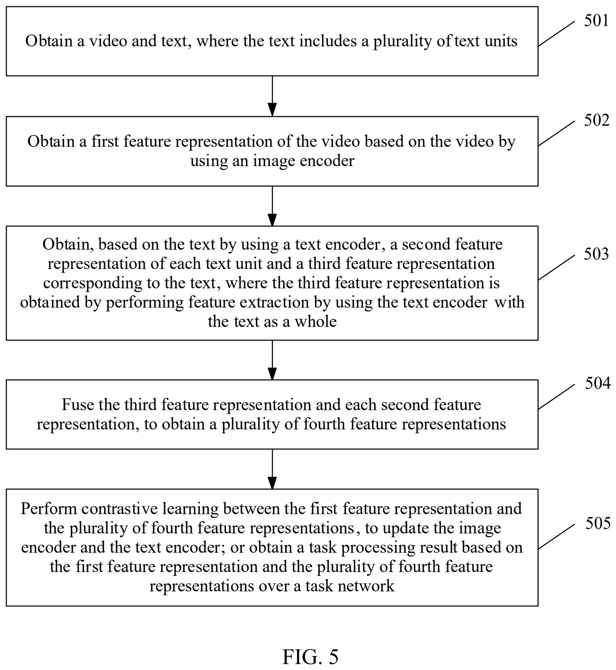

FIG. 5 is a schematic flowchart of a data processing method according to an embodiment of this application. As shown in FIG. 5, the data processing method provided in this embodiment of this application may include steps 501 to 505. The following separately describes these steps in detail.

501: Obtain a video and text, where the text includes a plurality of text units.

In a possible implementation, the video may be pre-stored locally in a terminal, or may be obtained by a terminal from the outside (for example, the internet), or may be captured by a terminal in real time, for example, captured in real time via a camera of the terminal.

In a possible implementation, the text may be text used to describe the video, or other text related to an executed task, for example, text related to video positioning.

502: Obtain a first feature representation of the video based on the video by using an image encoder.

In a possible implementation, feature extraction may be performed on the video by using the image encoder, to obtain the first feature representation.

In a possible implementation, the video may include a plurality of image frames, and feature extraction and attention operation may be performed based on the video by using the image encoder with each image frame as a whole, to obtain the first feature representation, where the first feature representation includes one first feature sub-representation corresponding to each image frame.

In a possible implementation, the image encoder may input each image frame to the image encoder as a whole (in other words, the image frame is not input to the image encoder as image blocks obtained through division). The image encoder may perform feature extraction and attention operation on each image frame, and the image encoder may focus on attention interaction in the spatial dimension.

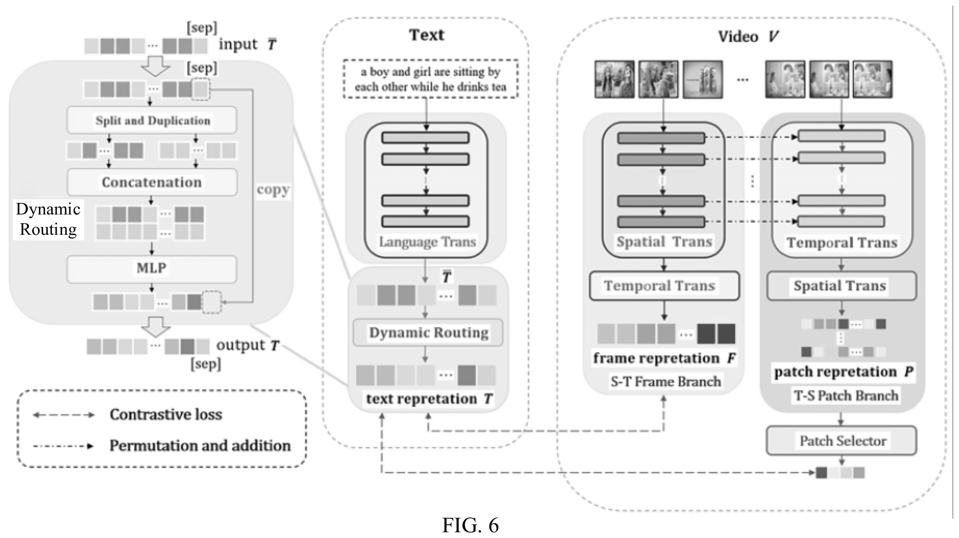

In terms of a network structure, the image encoder may include a plurality of first network layers and a plurality of second network layers. When processing the plurality of image frames, the image encoder may perform feature extraction and perform attention operation in a spatial dimension in the image frame through the plurality of first network layers, and perform feature extraction and perform attention operation in a temporal dimension between the image frames through the plurality of second network layers. In a possible implementation, the plurality of first network layers may be connected before the plurality of second network layers, or a quantity of first network layers is greater than a quantity of second network layers. A connection sequence or a quantity of network layers is designed, so that the image encoder can focus on attention interaction in the spatial dimension. For example, refer to FIG. 6. Spatial trans in a left branch of a video branch may include the plurality of first network layers, and temporal trans in the left branch of the video branch may include the plurality of second network layers.

In other words, a frame feature may be extracted, and the frame feature is input to a frame-level temporal modeling module to obtain an overall video feature. This branch does not damage image-text pre-training information. However, because only simple frame-level information is used in temporal modeling, a fine-grained understanding capability lacks.

In a possible implementation, the video includes the plurality of image frames, and feature extraction and attention operation may be performed based on the video by using the image encoder with each image block in each image frame as a whole, to obtain a second feature representation, where the second feature representation includes one second feature sub-representation corresponding to each image block.

In a possible implementation, the image encoder may input the image block in each image frame to the image encoder as a whole (in other words, the image frame is input to the image encoder as image blocks obtained through division). The image encoder may perform feature extraction and attention operation on each image block, and the image encoder may focus on attention interaction in the temporal dimension.

In terms of the network structure, the image encoder may include a plurality of third network layers and a plurality of fourth network layers. When processing the plurality of image frames, the image encoder may perform feature extraction and perform attention operation in the temporal dimension between the image frames through the plurality of third network layers, and perform feature extraction and perform attention operation in the spatial dimension in the image frame through the plurality of second network layers. In a possible implementation, the plurality of third network layers are connected before the plurality of fourth network layers, or a quantity of third network layers is greater than a quantity of fourth network layers. A connection sequence or a quantity of network layers is designed, so that the image encoder can focus on the attention interaction in the temporal dimension. For example, refer to FIG. 6. Temporal trans in a right branch of the video branch may include the plurality of third network layers, and spatial trans in the right branch of the video branch may include the plurality of fourth network layers.

In other words, a patch feature of the frame may be extracted by using the image encoder, and the patch feature is input to a patch-level temporal modeling module to obtain a fine-grained video feature.

The temporal modeling is inserted at an interval inside an original visual branch to implement interactive patch-level spatial-temporal information understanding. However, a visual branch structure of an original image-text pre-training model is damaged, and a large amount of image-text pre-training information is lost. In this embodiment of this application, interactive spatial-temporal information at a granularity of an image block can be implemented without damaging the visual branch structure of the original image-text pre-training model.

In a possible implementation, the image encoder may include a first encoder and a second encoder, the first encoder includes a first intermediate layer, and the second encoder includes a second intermediate layer. The first intermediate layer may be a network layer in the first encoder, and the second intermediate layer may be a network layer in the second encoder, for example, may be a transformer layer.

For the first encoder, the first encoder may perform feature extraction and attention operation on each image frame, and the first encoder may focus on the attention interaction in the spatial dimension.

For the second encoder, the second encoder may perform feature extraction and attention operation on each image block, and the second encoder may focus on attention interaction in the temporal dimension.

In a possible implementation, the first encoder includes a plurality of first network layers and a plurality of second network layers. The first intermediate layer belongs to the plurality of first network layers or the plurality of second network layers. Through the plurality of first network layers, feature extraction may be performed and attention operation in a spatial dimension may be performed in the image frame. Through the plurality of second network layers, feature extraction may be performed and attention operation in a temporal dimension may be performed between the image frames. The plurality of first network layers are connected before the plurality of second network layers, or a quantity of first network layers is greater than a quantity of second network layers.

In a possible implementation, the second encoder includes a plurality of third network layers and a plurality of fourth network layers. The second intermediate layer belongs to the plurality of third network layers or the plurality of fourth network layers. Through the plurality of third network layers, feature extraction may be performed and attention operation in the temporal dimension may be performed between the image frames. Through the plurality of second network layers, feature extraction may be performed and attention operation in the spatial dimension may be performed in the image frame. The plurality of third network layers are connected before the plurality of fourth network layers, or a quantity of third network layers is greater than a quantity of fourth network layers.

In a possible implementation, the first intermediate layer belongs to the plurality of first network layers and the second intermediate layer belongs to the plurality of third network layers.

In a possible implementation, the first intermediate layer belongs to the plurality of second network layers and the second intermediate layer belongs to the plurality of fourth network layers.

A first network layer may include all network layers that are in the first encoder and that are used to perform attention operation in the spatial dimension in the image frame, and a second network layer includes all network layers that are in the first encoder and that are used to perform attention operation in the temporal dimension between the image frames.

A third network layer may include all network layers that are in the second encoder and that are used to perform attention operation in the temporal dimension between the image frames, and a fourth network layer includes all network layers that are in the second encoder and that are used to perform attention operation in the spatial dimension in the image frame.

In a possible implementation, feature extraction and attention operation may be performed based on the video by using the first encoder with each image frame as a whole, to obtain the first feature representation, where the first feature representation includes the first feature sub-representation corresponding to each image frame. Feature extraction and attention operation may be performed based on the video and an output of the first intermediate layer by using the second encoder with each image block in each image frame as a whole, to obtain the second feature representation, where the second feature representation includes the second feature sub-representation corresponding to each image block.

The output of the first intermediate layer may be fused into an output or an input of the second intermediate layer.

The output of the first intermediate layer may be a feature obtained through spatial modeling, and the feature obtained through spatial modeling is fused into the second intermediate layer performing temporal modeling, to implement fusion of temporal modeling and spatial modeling. In addition, the visual branch structure (namely, a structure of the first encoder) of the original image-text pre-training model is not changed, and only a structure of the second encoder is changed, so that processing precision of the model is improved.

In a possible implementation, a size of the output of the first intermediate layer may be adjusted (reshape), where an adjusted size of the output of the first intermediate layer is consistent with a size of the input or the output of the second intermediate layer, and an addition operation is performed on corresponding locations of the adjusted output of the first intermediate layer and the input or the output of the second intermediate layer.

In a possible implementation, a location of the first intermediate layer in the first encoder matches a location of the second intermediate layer in the first encoder. For example, a location, of a network layer included in the first encoder, in the first encoder may be the same as a location, of a network layer included in the second encoder, in the second encoder.

It should be understood that the first intermediate layer may be a network layer in the first encoder, the second intermediate layer may be a network layer in the second encoder, and an output of each of a plurality of network layers in the first encoder may be fused into a corresponding network layer in the second encoder.

FIG. 6 is used as an example. A video processing part may be referred to as parallel allotropic visual attention: A visual dual-tower attention mechanism is constructed in which one is a frame-level attention branch (S-T Frame Branch), the other is a patch-level attention branch (T-S Patch Branch), and spatial-temporal attention sequences of the two are opposite (one branch first performs attention interaction in the spatial dimension, and then performs attention interaction in the temporal dimension; and the other branch first performs attention interaction in the temporal dimension, and then performs attention interaction in the spatial dimension). The S-T frame branch transfers a video feature at each layer to a corresponding layer in the T-S patch branch through permutation in a feature dimension for addition, to form valid fusion of frame-level spatial-temporal information (global information) and patch-level spatial-temporal information (fine-grained information).

This embodiment of this application provides a method for migrating an image-text pre-training model to multi-modal video understanding, so that a temporal understanding module is established in parallel with the visual branch of the image-text pre-training model to perform temporal modeling, without damaging the visual branch structure of the original image-text pre-training model.

503: Obtain, based on the text by using a text encoder, a second feature representation of each text unit and a third feature representation corresponding to the text, where the third feature representation is obtained by performing feature extraction by using the text encoder with the text as a whole.

It should be understood that the image encoder and the text encoder each in embodiments of this application may include an encoder-decoder.

In a possible implementation, the encoder may be one of the following models: LSTM, GRU, SRU, bert, roberta, spanbert, xlnet, GPT, nezha, mass, bart, mbart, albert, structbert, ernie, knowbert, k-bert, and tinybert.

In a possible implementation, the encoder may be understood as a deep learning network model, and there are a plurality of network structures of the encoder. This is not specifically limited in embodiments of this application. Specifically, the network structure of the encoder may be a network structure of an encoder part of the transformer network, or may include network structures of a series of other networks obtained based on the encoder part of the transformer network.

504: Fuse the third feature representation and each second feature representation, to obtain a plurality of fourth feature representations.

In a possible implementation, the second feature representation of each text unit (namely, a token of each text unit) may be obtained based on the text by using the text encoder.

In a possible implementation, the text may be English text, and the text unit may be one or more words. The text may be Chinese text, and the text unit may be a word unit or a phrase unit.

In a possible implementation, the third feature representation corresponding to the text may be obtained based on the text by using the text encoder, where the third feature representation is obtained by performing feature extraction by using the text encoder with the text as a whole.

In a possible implementation, the third feature representation and each second feature representation may be fused over an MLP network, to obtain the plurality of fourth feature representations (for example, each third feature representation may be fused to obtain a corresponding fourth feature representation).

In the conventional technology, during contrastive learning, a feature representation of a text branch includes only a feature representation obtained by performing feature extraction with text as a whole. However, during video processing, a branch processed at a granularity of an image block is included. This means that processing granularities on an image side and a text side are different. In this embodiment of this application, the feature representation of each text unit is obtained by processing the branch of the text. This means that a processing granularity of the branch of the text is lower than that in the conventional technology, and can be closer to that of the branch of the image, so that processing precision of the network can be improved. In addition, the feature representation of each text unit is obtained based on context information of the text unit and nearby context information, and can reflect only local information. In this embodiment of this application, the third feature representation obtained by performing feature extraction by using the text encoder with the text as a whole is fused into the feature representation corresponding to each text unit, so that the feature representation corresponding to each text unit also includes global text information, to improve the processing precision of the network.

Refer to FIG. 6. This application provides a text dynamic routing mechanism. The text feature is split based on the image-text pre-training model. A spatially related abstract description is split to the S-T frame branch, and a temporal fine-grained description is split to the T-S patch branch. This implements fine-grained visual-text alignment. The text dynamic routing mechanism is added after the text branch to effectively fine-grain the text information.

505: Perform contrastive learning between the first feature representation and the plurality of fourth feature representations, to update the image encoder and the text encoder. Through contrastive learning, a distance between an image feature and a text feature that have similar semantics (or information in another dimension) can be shortened.

In a possible implementation, contrastive learning may be performed between the first feature representation and the plurality of fourth feature representations, and contrastive learning may be performed between the first feature representation and the third feature representation.

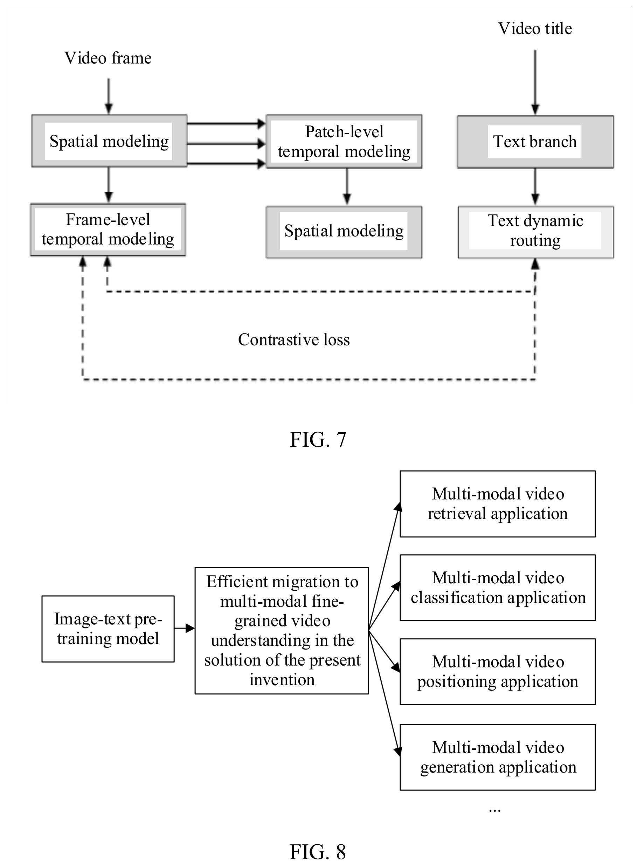

FIG. 7 shows a schematic architecture of a procedure according to an embodiment of this application.

FIG. 8 shows a system architecture and an application scenario to which an embodiment of this application is applied. This solution may be used as a general solution for efficiently migrating image-text pre-training to multi-modal video understanding, and is applied to various video understanding tasks, for example, multi-modal video retrieval, classification, positioning, and generation (for example, video question and answer, video title generation, and video generation).

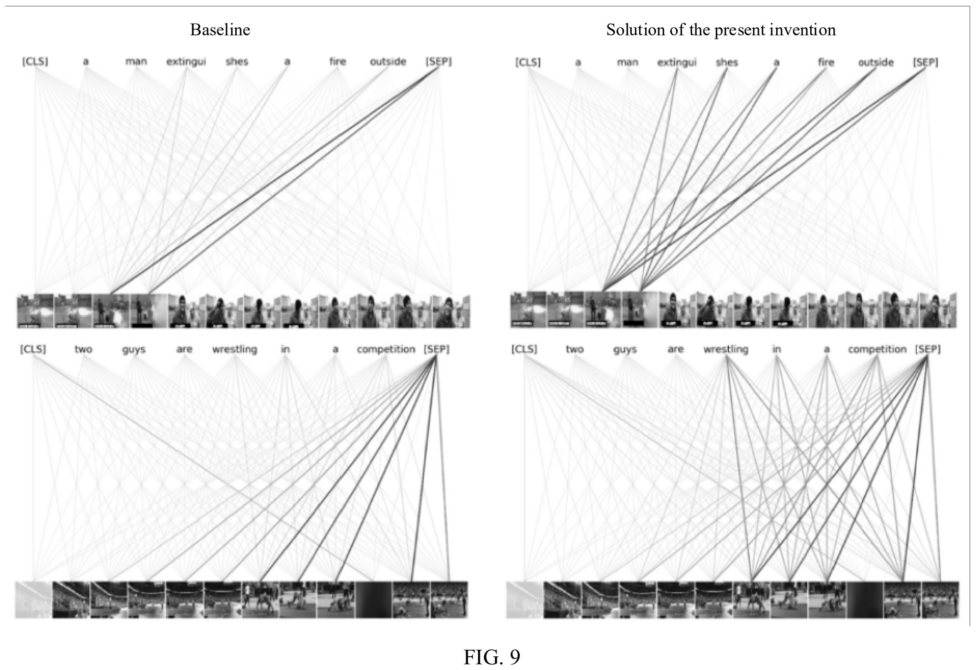

Compared with the baseline model, embodiments of this application can significantly enhance a verb or fine-grained understanding capability. For example, fine-grained verbs extinguishes (extinguishes) and wresting (wrestling) are correctly associated with correct video frames. FIG. 9 is a diagram of multi-modal attention (attention) visualization.

Table 1 shows processing effect on the MSR-VTT public dataset, Table 2 shows processing effect on the LMSDC public dataset, and Table 3 shows processing effect on the ActivityNet public dataset, and Table 4 shows processing effect on the DiDeMo public dataset.

Table 1

| Method | Text-to-Video | | | | | Video-To-Text | | | | |
|---|---|---|---|---|---|---|---|---|---|---|
| | R@1 ↑ | R@5 ↑ | R@10 ↑ | MdR ↓ | MnR ↓ | R@1 ↑ | R@5 ↑ | R@10 ↑ | MdR ↓ | MnR ↓ |
| HERO [23] | 16.8 | 43.4 | 57.7 | - | - | - | - | - | - | - |
| MDMMT [11] | 38.9 | 69.0 | 79.7 | **2.0** | 16.5 | - | - | - | - | - |
| Support Set [30] | 30.1 | 58.5 | 69.3 | 3.0 | - | 30.1 | 58.5 | 69.3 | 3.0 | - |
| CLIP4Clip [28] | 44.5 | 71.4 | 81.6 | **2.0** | 15.3 | 42.7 | 70.9 | 80.6 | **2.0** | 11.6 |
| CLIP2Video [12] | 45.6 | 72.6 | 81.7 | **2.0** | 14.6 | 43.3 | 72.3 | 82.1 | **2.0** | 10.2 |
| X-Pool [15] | 46.9 | 72.8 | 82.2 | **2.0** | 14.3 | 44.4 | 73.3 | **84.0** | **2.0** | 9 |
| X-CLIP [29] | 46.1 | 73.0 | 83.1 | **2.0** | 13.2 | 46.8 | 73.3 | **84.0** | **2.0** | 9.1 |
| CLIP2TV [14] | 46.1 | 72.5 | 82.9 | **2.0** | 15.2 | 43.9 | 73 | **82.8** | **2.0** | 11.1 |
| TS2-Net [26] | 47.0 | **74.5** | **83.8** | - | 13.0 | 45.3 | 74.1 | 83.7 | - | **9.2** |
| PIDRo (ours) | **48.1** | 74.1 | 83.6 | **2.0** | **11.5** | 47.2 | 74.2 | 83.6 | **2.0** | **8.0** |
| CLIP2TV* [4] | 49.3 | 74.7 | 83.6 | 2.0 | 13.5 | 46.9 | 75 | **85.1** | 2.0 | 10 |
| TS2-Net* [26] | 49.4 | 75.6 | 85.3 | - | 13.5 | 46.6 | 75.9 | 84.9 | - | 8.9 |
| PIDRo* (ours) | **50.2** | **77** | **85.4** | **1.0** | **12.5** | **49.4** | **76.3** | **84.6** | **1.0** | **8.4** |

Table 2

| Methods | R@1 ↑ | R@5 ↑ | R@10 ↑ | MdR ↓ | MnR ↓ |
|---|---|---|---|---|---|
| MMT [13] | 12.9 | 29.9 | 40.1 | 19.3 | 75.0 |
| Straight-CLIP [31] | 11.3 | 22.7 | 29.2 | 56.5 | - |
| MDMMT [11] | 18.8 | 38.5 | 47.9 | 12.3 | 58.0 |
| CLIP4Clip-meanP [28] | 20.7 | 38.9 | 47.2 | 13.0 | 65.3 |
| CLIP4Clip-seqTransf [28] | 22.6 | 41.0 | 49.1 | 11.0 | 61.0 |
| X-Pool [15] | 25.2 | 43.7 | 53.5 | 8.0 | 53.2 |
| X-CLIP [29] | 23.3 | 43.0 | - | - | 56.0 |
| TS2-Net [26] | 23.4 | 42.3 | 50.9 | 9.0 | 56.9 |
| PIDRo (ours) | **25.4** | **43.9** | **54.0** | **8.0** | **50.3** |

Table 3

| Methods | R@1 ↑ | R@5 ↑ | R@10 ↑ | MdR ↓ | MnR ↓ |
|---|---|---|---|---|---|
| CE [25] | 20.5 | 47.7 | 63.9 | 6.0 | 23.1 |
| ClipBERT+ [22] | 21.3 | 49.0 | 63.5 | 6.0 | - |
| MMT [13] | 28.7 | 61.4 | - | 3.3 | 16.0 |
| Support Set [30] | 29.2 | 61.6 | - | 3.0 | - |
| HiT [24] | 29.6 | 60.7 | - | 3.0 | - |
| CLIP4Clip-seqTransf [28] | 40.5 | 72.4 | - | 2.0 | 7.5 |
| X-CLIP [29] | 44.3 | 74.1 | - | - | 7.9 |
| TS2-Net [26] | 41.0 | 73.6 | 84.5 | 2.0 | 8.4 |
| PIDRo (ours) | **44.9** | **74.5** | **86.1** | **2.0** | **6.4** |

Table 4

| Methods | R@1 ↑ | R@5 ↑ | R@10 ↑ | MdR ↓ | MnR ↓ |
|---|---|---|---|---|---|
| CE [25] | 16.1 | 41.1 | - | 8.3 | 43.7 |
| ClipBERT [22] | 21.1 | 47.3 | 61.1 | 6.3 | - |
| TeachText-CE+ [9] | 21.6 | 48.6 | 62.9 | 6.0 | - |
| Frozen [3] | 31.0 | 59.8 | 72.4 | 3.0 | - |
| CLIP4Clip-seqLSTM [28] | 43.4 | 69.9 | 80.2 | **2.0** | 17.5 |

(continued)

| Methods | R@1 $\uparrow$ | R@5 $\uparrow$ | R@10 $\uparrow$ | MdR $\downarrow$ | MnR $\downarrow$ |
|---|---|---|---|---|---|
| CLIP4Clip-mcanP [28] | 43.4 | 70.2 | 80.6 | **2.0** | 17.5 |
| X-CLIP [29] | 45.2 | 74.0 | - | - | 14.6 |
| TS2-Net [26] | 41.8 | 71.6 | 82.0 | **2.0** | 14.8 |
| PIDRo (ours) | **48.6** | **75.9** | **84.4** | **2.0** | **11.8** |

In addition, an embodiment of this application further provides a data processing method. The method includes: obtaining a video and text, where the text includes a plurality of text units; obtaining a first feature representation of the video based on the video by using an image encoder; obtaining, based on the text by using a text encoder, a second feature representation of each text unit and a third feature representation corresponding to the text, where the third feature representation is obtained by performing feature extraction by using the text encoder with the text as a whole; fusing the third feature representation and each second feature representation, to obtain a plurality of fourth feature representations; and obtaining a task processing result based on the first feature representation and the plurality of fourth feature representations over a task network.

In a possible implementation, the task network is used to implement at least one of the following tasks: a video retrieval task, a video classification task, a video positioning task, and a video generation task (for example, video question and answer and video title generation).

In addition, an embodiment of this application further provides a data processing method. The method includes: obtaining a video and text, where the text includes a plurality of text units; obtaining a first feature representation of the video based on the video by using an image encoder; obtaining, based on the text by using a text encoder, a second feature representation of each text unit and a third feature representation corresponding to the text, where the third feature representation is obtained by performing feature extraction by using the text encoder with the text as a whole; fusing the third feature representation and each second feature representation, to obtain a plurality of fourth feature representations; obtaining a task processing result based on the first feature representation and the plurality of fourth feature representations over a task network; and updating the image encoder, the text encoder, and the task network based on the task processing result.

In a possible implementation, the task network is used to implement at least one of the following tasks: a video retrieval task, a video classification task, a video positioning task, and a video generation task (for example, video question and answer and video title generation).

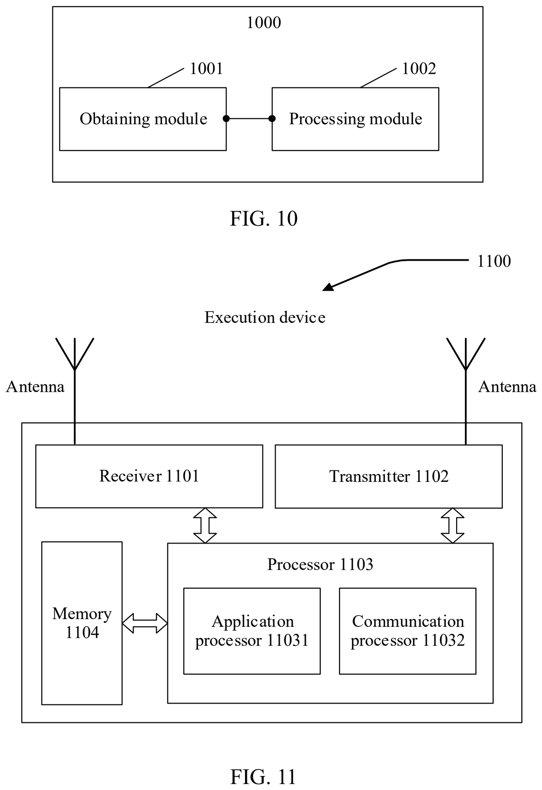

FIG. 10 is a diagram of a structure of a data processing apparatus according to an embodiment of this application. As shown in FIG. 10, an embodiment of this application provides a data processing apparatus. The apparatus 1000 includes an obtaining module 1001 and a processing module 1002.

The obtaining module 1001 is configured to obtain a video and text, where the text includes a plurality of text units.

For a specific description of the obtaining module 1001, refer to the description of step 501 in the foregoing embodiment. Details are not described herein again.

The processing module 1002 is configured to: obtain a first feature representation of the video based on the video by using an image encoder;

obtain, based on the text by using a text encoder, a second feature representation of each text unit and a third feature representation corresponding to the text, where the third feature representation is obtained by performing feature extraction by using the text encoder with the text as a whole;

fuse the third feature representation and each second feature representation, to obtain a plurality of fourth feature representations; and

perform contrastive learning between the first feature representation and the plurality of fourth feature representations, to update the image encoder and the text encoder.

For a specific description of the processing module 1002, refer to the descriptions of step 502 to step 505 in the foregoing embodiment. Details are not described herein again.

In a possible implementation, the processing module is specifically configured to:

perform feature extraction and attention operation based on the video by using the image encoder with each image frame as a whole, to obtain the first feature representation, where the first feature representation includes one first feature sub-representation corresponding to each image frame.

In a possible implementation, the processing module is specifically configured to:

perform feature extraction and attention operation based on the video by using the image encoder with each image block in each image frame as a whole, to obtain a second feature representation, where the second feature representation includes one second feature sub-representation corresponding to each image block.

In a possible implementation, the image encoder includes a first encoder and a second encoder, the first encoder includes a first intermediate layer, and the second encoder includes a second intermediate layer; and the processing module is specifically configured to:

perform feature extraction and attention operation based on the video by using the first encoder with each image frame as a whole, to obtain the first feature representation, where the first feature representation includes the first feature sub-representation corresponding to each image frame; and

perform feature extraction and attention operation based on the video and an output of the first intermediate layer by using the second encoder with each image block in each image frame as a whole, to obtain the second feature representation, where the second feature representation includes the second feature sub-representation corresponding to each image block, and the output of the first intermediate layer is fused into an output or an input of the second intermediate layer.

In a possible implementation, the first encoder includes a plurality of first network layers and a plurality of second network layers, the first intermediate layer belongs to the plurality of first network layers or the plurality of second network layers, and the processing module is specifically configured to:

perform feature extraction and perform attention operation in a spatial dimension in the image frame through the plurality of first network layers, and perform feature extraction and perform attention operation in a temporal dimension between the image frames through the plurality of second network layers, where the plurality of first network layers are connected before the plurality of second network layers, or a quantity of first network layers is greater than a quantity of second network layers.

In a possible implementation, the second encoder includes a plurality of third network layers and a plurality of fourth network layers, the second intermediate layer belongs to the plurality of third network layers or the plurality of fourth network layers, and the processing module is specifically configured to:

perform feature extraction and perform attention operation in the temporal dimension between the image frames through the plurality of third network layers, and perform feature extraction and perform attention operation in the spatial dimension in the image frame through the plurality of second network layers, where the plurality of third network layers are connected before the plurality of fourth network layers, or a quantity of third network layers is greater than a quantity of fourth network layers.

In a possible implementation, the first intermediate layer belongs to the plurality of first network layers and the second intermediate layer belongs to the plurality of third network layers.

In a possible implementation, the processing module is specifically configured to:
adjust a size of the output of the first intermediate layer, where an adjusted size of the output of the first intermediate layer is consistent with a size of the input or the output of the second intermediate layer; and perform an addition operation on corresponding locations of the adjusted output of the first intermediate layer and the input or the output of the second intermediate layer.

In a possible implementation, a location of the first intermediate layer in the first encoder matches a location of the second intermediate layer in the first encoder.

In a possible implementation, the processing module is specifically configured to:
perform contrastive learning between the first feature representation and the plurality of fourth feature representations; and perform contrastive learning between the first feature representation and the third feature representation.

In addition, an embodiment of this application further provides a data processing apparatus. The apparatus includes:

an obtaining module: configured to obtain a video and text, where the text includes a plurality of text units; and a processing module, configured to: obtain a first feature representation of the video based on the video by using an image encoder;

obtain, based on the text by using a text encoder, a second feature representation of each text unit and a third feature representation corresponding to the text, where the third feature representation is obtained by performing feature extraction by using the text encoder with the text as a whole;

fuse the third feature representation and each second feature representation, to obtain a plurality of fourth feature representations; and

obtain a task processing result based on the first feature representation and the plurality of fourth feature representations over a task network.

In a possible implementation, the task network is used to implement at least one of the following tasks: a video retrieval task, a video classification task, a video positioning task, and a video generation task (for example, video question and answer and video title generation).

In addition, an embodiment of this application further provides a data processing apparatus. The apparatus includes:

an obtaining module: configured to obtain a video and text, where the text includes a plurality of text units; and

a processing module, configured to: obtain a first feature representation of the video based on the video by using an image encoder;

obtain, based on the text by using a text encoder, a second feature representation of each text unit and a third feature representation corresponding to the text, where the third feature representation is obtained by performing feature extraction by using the text encoder with the text as a whole;

fuse the third feature representation and each second feature representation, to obtain a plurality of fourth feature representations;

obtain a task processing result based on the first feature representation and the plurality of fourth feature representations over a task network; and

update the image encoder, the text encoder, and the task network based on the task processing result.

In a possible implementation, the task network is used to implement at least one of the following tasks: a video retrieval task, a video classification task, a video positioning task, and a video generation task (for example, video question and answer and video title generation).

The following describes an execution device provided in embodiments of this application. FIG. 11 is a diagram of a structure of an execution device according to an embodiment of this application. The execution device 1100 may be specifically represented as a virtual reality VR device, a mobile phone, a tablet, a notebook computer, an intelligent wearable device, a monitoring data processing device, a server, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in embodiments of this application may be applied to the processor 1103, or implemented by the processor 1103. The processor 1103 may be an integrated circuit chip and has a signal processing capability. In an implementation process, steps in the foregoing methods can be implemented by using a hardware integrated logic circuit in the processor 1103, or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps related to the model inference process in the foregoing methods in combination with hardware of the processor 1103.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device like a display.

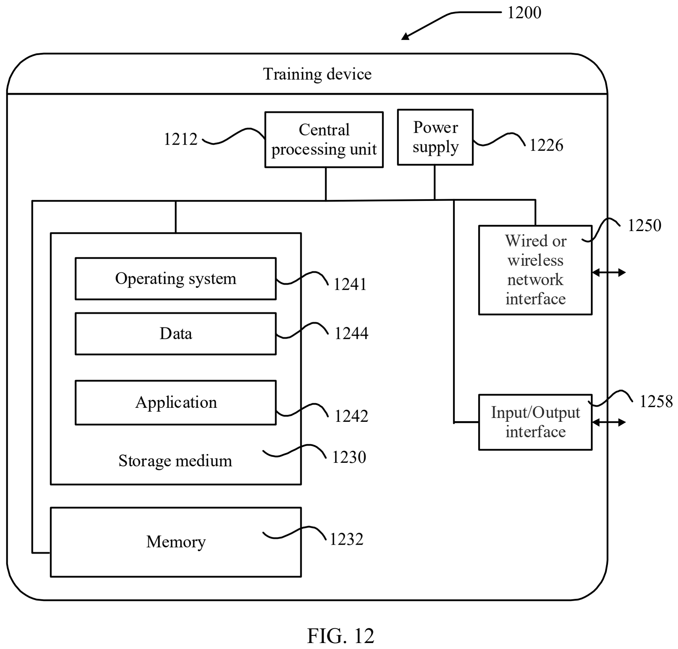

An embodiment of this application further provides a training device. FIG. 12 is a diagram of a structure of a training device according to an embodiment of this application. Specifically, the training device 1200 is implemented by one or more servers, the training device 1200 may vary greatly with configuration or performance, and may include one or more central processing units (central processing units, CPUs) 1212 (for example, one or more processors), a memory 1232, and one or more storage media 1230 (for example, one or more mass storage devices) that store an application 1242 or data 1244. The memory 1232 and the storage medium 1230 may be transient storage or persistent storage. A program stored in the storage medium 1230 may include one or more modules (not shown in the figure), and each module may include a series of instruction operations for the training device. Further, the central processing unit 1212 may be configured to: communicate with the storage medium 1230, and perform a series of instruction operations in the storage medium 1230 on the training device 1200.

The training device 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

In this embodiment of this application, the central processing unit 1212 is configured to perform an action related to model training in the foregoing embodiments.

An embodiment of this application further provides a computer program product. When the computer program product runs on a computer, the computer is enabled to perform steps performed by the execution device, or the computer is enabled to perform steps performed by the training device.

An embodiment of this application further provides a computer-readable storage medium. The computer-readable storage medium stores a program used to process a signal, and when the program is run on a computer, the computer is enabled to perform steps performed by the execution device; or the computer is enabled to perform steps performed by the training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

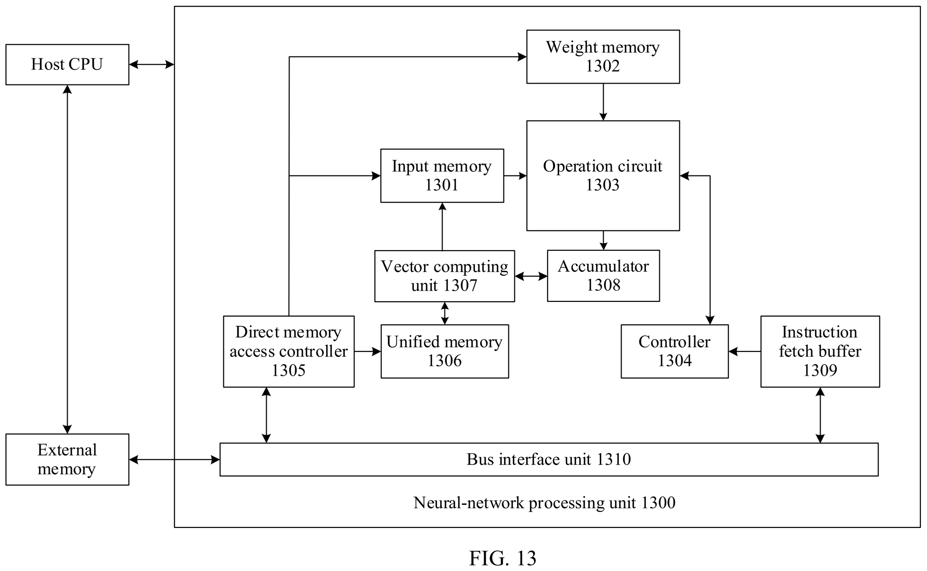

Specifically, FIG. 13 is a diagram of a structure of a chip according to an embodiment of this application. The chip may be represented as a neural-network processing unit NPU 1300. The NPU 1300 is mounted to a host CPU (Host CPU) as a coprocessor, and the host CPU allocates a task. A core part of the NPU is an operation circuit 1303, and a controller 1304 controls the operation circuit 1303 to extract matrix data in a memory and performs multiplication operation.

In some implementations, the operation circuit 1303 includes a plurality of process engines (Process Engine, PE). In some implementations, the operation circuit 1303 is a two-dimensional systolic array. The operation circuit 1303 may alternatively be a one-dimensional systolic array or another electronic circuit capable of performing mathematical operation such as multiplication and addition. In some implementations, the operation circuit 1303 is a general-purpose matrix processor.

For example, it is assumed that there is an input matrix A, a weight matrix B, and an output matrix C. The operation circuit fetches, from a weight memory 1302, data corresponding to the matrix B, and buffers the data on each PE in the operation circuit. The operation circuit fetches data of the matrix A from an input memory 1301 to perform matrix operation on the matrix B, and stores an obtained partial result or an obtained final result of the matrix in an accumulator (accumulator) 1308.

A unified memory 1306 is configured to: store input data and output data. Weight data is directly transferred to the weight memory 1302 through a direct memory access controller (Direct Memory Access Controller, DMAC) 1305. The input data is also transferred to the unified memory 1306 through the DMAC.

A BIU is a bus interface unit, namely, a bus interface unit 1310, and is used for interaction between an AXI bus and the DMAC and between the AXI bus and an instruction fetch buffer (Instruction Fetch Buffer, IFB) 1309.

The bus interface unit (Bus Interface Unit, briefly referred to as BIU) 1310 is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer the input data to the input memory 1301.

A vector computing unit 1307 includes a plurality of operation processing units; and if necessary, performs further processing such as vector multiplication, vector addition, exponential operation, logarithmic operation, or value comparison on an output of the operation circuit 1303. The vector computing unit 1307 is mainly used for network computing, for example, batch normalization (batch normalization), pixel-level addition, or upsampling on a feature plane, at a non-convolutional/full connection layer of a neural network.

In some implementations, the vector computing unit 1307 can store a processed output vector in the unified memory 1306. For example, the vector computing unit 1307 may apply a linear function or a nonlinear function to the output of the operation circuit 1303, for example, perform linear interpolation on a feature plane extracted at a convolutional layer, and for another example, obtain a vector of an accumulated value to generate an activation value. In some implementations, the vector computing unit 1307 generates a normalized value, a value obtained through pixel-level addition, or both a normalized value and a value obtained through pixel-level addition. In some implementations, the processed output vector can be used as an activation input to the operation circuit 1303. For example, the processed output vector can be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate components may or may not be physically separate, and components displayed as units may or may not be physical units, may be located in one place, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that can be completed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

**Claims**

1.  A data processing method, wherein the method comprises:

    obtaining a video and text, wherein the text comprises a plurality of text units;
    obtaining a first feature representation of the video based on the video by using an image encoder;
    obtaining, based on the text by using a text encoder, a second feature representation of each text unit and a third feature representation corresponding to the text, wherein the third feature representation is obtained by performing feature extraction by using the text encoder with the text as a whole;
    fusing the third feature representation and each second feature representation, to obtain a plurality of fourth feature representations; and
    performing contrastive learning between the first feature representation and the plurality of fourth feature representations, to update the image encoder and the text encoder; or obtaining a task processing result based on the first feature representation and the plurality of fourth feature representations over a task network.

2.  The method according to claim 1, wherein the video comprises a plurality of image frames, and the obtaining the first feature representation of the video based on the video by using the image encoder comprises:
    performing feature extraction and attention operation based on the video by using the image encoder with each image frame as a whole, to obtain the first feature representation, wherein the first feature representation comprises one first feature sub-representation corresponding to each image frame.

3.  The method according to claim 1, wherein the video comprises a plurality of image frames, and the obtaining the first feature representation of the video based on the video by using the image encoder comprises:
    performing feature extraction and attention operation based on the video by using the image encoder with each image block in each image frame as a whole, to obtain a second feature representation, wherein the second feature representation comprises one second feature sub-representation corresponding to each image block.

4.  The method according to any one of claims 1 to 3, wherein the image encoder comprises a first encoder and a second encoder, the first encoder comprises a first intermediate layer, and the second encoder comprises a second intermediate layer; and
    the obtaining the first feature representation of the plurality of image frames based on the video by using the image encoder comprises:

    performing feature extraction and attention operation based on the video by using the first encoder with each image frame as a whole, to obtain the first feature representation, wherein the first feature representation comprises the first feature sub-representation corresponding to each image frame; and
    performing feature extraction and attention operation based on the video and an output of the first intermediate layer by using the second encoder with each image block in each image frame as a whole, to obtain the second feature representation, wherein the second feature representation comprises the second feature sub-representation corresponding to each image block, and the output of the first intermediate layer is fused into an output or an input of the second intermediate layer.

5.  The method according to claim 4, wherein the first encoder comprises a plurality of first network layers and a plurality of second network layers, the first intermediate layer belongs to the plurality of first network layers or the plurality of second network layers, and the performing feature extraction and attention operation by using the first encoder comprises:

    through the plurality of first network layers, performing feature extraction and performing attention operation in a spatial dimension in the image frame; and through the plurality of second network layers, performing feature extraction and performing attention operation in a temporal dimension between the image frames, wherein the plurality of first network layers are connected before the plurality of second network layers, or a quantity of first network layers is greater than a quantity of second network layers.

6.  The method according to claim 4 or 5, wherein the second encoder comprises a plurality of third network layers and a plurality of fourth network layers, the second intermediate layer belongs to the plurality of third network layers or the plurality of fourth network layers, and the performing feature extraction and attention operation by using the second encoder comprises:

through the plurality of third network layers, performing feature extraction and performing attention operation in the temporal dimension between the image frames; and through the plurality of second network layers, performing feature extraction and performing attention operation in the spatial dimension in the image frame, wherein

the plurality of third network layers are connected before the plurality of fourth network layers, or a quantity of third network layers is greater than a quantity of fourth network layers.

7. The method according to claim 6, wherein the first intermediate layer belongs to the plurality of first network layers and the second intermediate layer belongs to the plurality of third network layers.

8. The method according to any one of claims 4 to 7, wherein that the output of the first intermediate layer is fused into the output or the input of the second intermediate layer comprises:
adjusting a size of the output of the first intermediate layer, wherein an adjusted size of the output of the first intermediate layer is consistent with a size of the input or the output of the second intermediate layer; and performing an addition operation on corresponding locations of the adjusted output of the first intermediate layer and the input or the output of the second intermediate layer.

9. The method according to any one of claims 4 to 8, wherein a location of the first intermediate layer in the first encoder matches a location of the second intermediate layer in the first encoder.

10. The method according to any one of claims 1 to 9, wherein the performing contrastive learning between the first feature representation and the plurality of fourth feature representations comprises:
performing contrastive learning between the first feature representation and the plurality of fourth feature representations; and performing contrastive learning between the first feature representation and the third feature representation.

11. A data processing apparatus, wherein the apparatus comprises:

an obtaining module: configured to obtain a video and text, wherein the text comprises a plurality of text units; and
a processing module, configured to: obtain a first feature representation of the video based on the video by using an image encoder;
obtain, based on the text by using a text encoder, a second feature representation of each text unit and a third feature representation corresponding to the text, wherein the third feature representation is obtained by performing feature extraction by using the text encoder with the text as a whole;
fuse the third feature representation and each second feature representation, to obtain a plurality of fourth feature representations; and
perform contrastive learning between the first feature representation and the plurality of fourth feature representations, to update the image encoder and the text encoder; or obtain a task processing result based on the first feature representation and the plurality of fourth feature representations over a task network.

12. The apparatus according to claim 11, wherein the processing module is specifically configured to:
perform feature extraction and attention operation based on the video by using the image encoder with each image frame as a whole, to obtain the first feature representation, wherein the first feature representation comprises one first feature sub-representation corresponding to each image frame.

13. The apparatus according to claim 11, wherein the processing module is specifically configured to:
perform feature extraction and attention operation based on the video by using the image encoder with each image block in each image frame as a whole, to obtain a second feature representation, wherein the second feature representation comprises one second feature sub-representation corresponding to each image block.

14. The apparatus according to any one of claims 11 to 13, wherein the image encoder comprises a first encoder and a second encoder, the first encoder comprises a first intermediate layer, and the second encoder comprises a second intermediate layer; and
the processing module is specifically configured to:

perform feature extraction and attention operation based on the video by using the first encoder with each image frame as a whole, to obtain the first feature representation, wherein the first feature representation comprises the first feature sub-representation corresponding to each image frame; and

perform feature extraction and attention operation based on the video and an output of the first intermediate layer by using the second encoder with each image block in each image frame as a whole, to obtain the second feature representation, wherein the second feature representation comprises the second feature sub-representation corresponding to each image block, and the output of the first intermediate layer is fused into an output or an input of the second intermediate layer.

15. The apparatus according to claim 14, wherein the first encoder comprises a plurality of first network layers and a plurality of second network layers, the first intermediate layer belongs to the plurality of first network layers or the plurality of second network layers, and the processing module is specifically configured to:

perform feature extraction and perform attention operation in a spatial dimension in the image frame through the plurality of first network layers, and perform feature extraction and perform attention operation in a temporal dimension between the image frames through the plurality of second network layers, wherein the plurality of first network layers are connected before the plurality of second network layers, or a quantity of first network layers is greater than a quantity of second network layers.

16. The apparatus according to claim 14 or 15, wherein the second encoder comprises a plurality of third network layers and a plurality of fourth network layers, the second intermediate layer belongs to the plurality of third network layers or the plurality of fourth network layers, and the processing module is specifically configured to:

perform feature extraction and perform attention operation in the temporal dimension between the image frames through the plurality of third network layers, and perform feature extraction and perform attention operation in the spatial dimension in the image frame through the plurality of second network layers, wherein the plurality of third network layers are connected before the plurality of fourth network layers, or a quantity of third network layers is greater than a quantity of fourth network layers.

17. The apparatus according to any one of claims 11 to 16, wherein the first intermediate layer belongs to the plurality of first network layers and the second intermediate layer belongs to the plurality of third network layers.

18. The apparatus according to any one of claims 11 to 17, wherein the processing module is specifically configured to: adjust a size of the output of the first intermediate layer, wherein an adjusted size of the output of the first intermediate layer is consistent with a size of the input or the output of the second intermediate layer; and perform an addition operation on corresponding locations of the adjusted output of the first intermediate layer and the input or the output of the second intermediate layer.

19. The apparatus according to any one of claims 14 to 18, wherein a location of the first intermediate layer in the first encoder matches a location of the second intermediate layer in the first encoder.

20. The apparatus according to any one of claims 11 to 19, wherein the processing module is specifically configured to: perform contrastive learning between the first feature representation and the plurality of fourth feature representations; and perform contrastive learning between the first feature representation and the third feature representation.

21. A computer storage medium, wherein the computer storage medium stores one or more instructions, and when the instructions are executed by one or more computers, the one or more computers are enabled to perform operations of the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected and communicate with each other through a communication bus;

the at least one memory is configured to store code; and
the at least one processor is configured to execute the code to perform the method according to any one of claims 1 to 10.

FIG. 1A

102

101

Parameter → Video understanding application → Processing result

103

FIG. 1B

**Parameter**

**Processing result**

**Terminal 100**

**Server 200**

FIG. 1C

Terminal 100

(Optional)

110 — Radio frequency unit

Camera (Optional) 150

160

Speaker 161

190

170

Microphone 162

Power supply

Processor

Audio circuit (Optional)

180 — External interface

Headset jack — 163

120 — Memory

(Optional) 131

Touchscreen

130 — Input unit

Display unit — 140

Another input device

132

**FIG. 1D**

Processor 202

Communication interface 203

Bus 201

Memory 204

Server 200

**FIG. 2**

FIG. 3

Cloud platform

Video understanding and processing service

**Cloud environment**

1. Activate a content audit service

2. Download an SDK

4. Invoke the service

5. Respond to the service

3. Configure an environment and import an SDK project

Local development environment

Application

FIG. 4

```
┌─────────────────────────────────────────────────────────────┐
│  Obtain a video and text, where the text includes a          │╱─ 501
│  plurality of text units                                     │
└─────────────────────────────────────────────────────────────┘
                             │
                             ▼
┌─────────────────────────────────────────────────────────────┐
│  Obtain a first feature representation of the video based    │╱─ 502
│  on the video by using an image encoder                      │
└─────────────────────────────────────────────────────────────┘
                             │
                             ▼
┌─────────────────────────────────────────────────────────────┐
│  Obtain, based on the text by using a text encoder, a        │
│  second feature representation of each text unit and a       │╱─ 503
│  third feature representation corresponding to the text,     │
│  where the third feature representation is obtained by       │
│  performing feature extraction by using the text encoder     │
│  with the text as a whole                                    │
└─────────────────────────────────────────────────────────────┘
                             │
                             ▼
┌─────────────────────────────────────────────────────────────┐
│  Fuse the third feature representation and each second       │╱─ 504
│  feature representation, to obtain a plurality of fourth     │
│  feature representations                                     │
└─────────────────────────────────────────────────────────────┘
                             │
                             ▼
┌─────────────────────────────────────────────────────────────┐
│  Perform contrastive learning between the first feature      │
│  representation and the plurality of fourth feature          │
│  representations, to update the image encoder and the text   │╱─ 505
│  encoder; or obtain a task processing result based on the    │
│  first feature representation and the plurality of fourth    │
│  feature representations over a task network                 │
└─────────────────────────────────────────────────────────────┘
```

FIG. 5

FIG. 6

Video frame

Video title

Spatial modeling → Patch-level temporal modeling

Text branch

Frame-level temporal modeling

Spatial modeling

Text dynamic routing

Contrastive loss

**FIG. 7**

Image-text pre-training model → Efficient migration to multi-modal fine-grained video understanding in the solution of the present invention

Multi-modal video retrieval application

Multi-modal video classification application

Multi-modal video positioning application

Multi-modal video generation application

...

**FIG. 8**

FIG. 9

1000

1001

1002

Obtaining module

Processing module

FIG. 10

1100

Execution device

Antenna

Antenna

Receiver 1101

Transmitter 1102

Processor 1103

Memory 1104

Application processor 11031

Communication processor 11032

FIG. 11

1200

Training device

1212 — Central processing unit

Power supply — 1226

Operating system — 1241

Data — 1244

Application — 1242

Storage medium — 1230

Memory — 1232

Wired or wireless network interface — 1250

Input/Output interface — 1258

FIG. 12

FIG. 13

## INTERNATIONAL SEARCH REPORT

| | International application No. |
|---|---|
| | **PCT/CN2024/084667** |

| A. | CLASSIFICATION OF SUBJECT MATTER |
|---|---|

G06N 3/0455(2023.01)i; G06N 3/08(2023.01)i; G06F 18/25(2023.01)i; G06F 18/213(2023.01)i

According to International Patent Classification (IPC) or to both national classification and IPC

| B. | FIELDS SEARCHED |
|---|---|

Minimum documentation searched (classification system followed by classification symbols)

IPC: G06N G06F

Documentation searched other than minimum documentation to the extent that such documents are included in the fields searched

Electronic data base consulted during the international search (name of data base and, where practicable, search terms used)

CNTXT: CNABS; CNKI; VEN; USTXT; WOTXT; EPTXT: 视频, 图像, 文本, 编码器, 特征, 融合, 对比, 学习, 更新, 网络, video, image, text, encoder, feature, fusion, contrast, learning, update, network

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116542289 A (HUAWEI TECHNOLOGIES CO., LTD.) 04 August 2023 (2023-08-04) claims 1-23, and description, paragraphs [0007]-[0338] | 1-23 |
| Y | CN 115512005 A (HUAWEI TECHNOLOGIES CO., LTD.) 23 December 2022 (2022-12-23) description, paragraphs [0006]-[0362] | 1-23 |
| Y | CN 115114480 A (TENCENT TECHNOLOGY (SHENZHEN) CO., LTD.) 27 September 2022 (2022-09-27) description, paragraphs [0004]-[0249] | 1-23 |
| A | JP 2008005349 A (YAMAHA CORP.) 10 January 2008 (2008-01-10) entire document | 1-23 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 May 2024** | **02 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/084667**

| Patent document cited in search report | | | Publication date (day/month/year) | Patent family member(s) | | | Publication date (day/month/year) |
|---|---|---|---|---|---|---|---|
| CN | 116542289 | A | 04 August 2023 | None | | | |
| CN | 115512005 | A | 23 December 2022 | WO | 2024041479 | A1 | 29 February 2024 |
| CN | 115114480 | A | 27 September 2022 | None | | | |
| JP | 2008005349 | A | 10 January 2008 | None | | | |

Form PCT/ISA/210 (patent family annex) (July 2022)

**EP 4 682 763 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310369601